# EUROPEAN PATENT SPECIFICATION

(11) **EP 3 388 797 B1**
(45) Date of publication and mention of the grant of the patent: **16.11.2022**
(21) Application number: 18164918.7
(22) Date of filing: 29.03.2018
(51) Int. Cl.: G01H 1/00, G01M 13/00

(54) **EXACT CONSTRAINT THREE-POINT VIBRATION SENSING MODULE**
DREIPUNKT-VIBRATIONSERFASSUNGSMODUL MIT GENAUER EINSCHRÄNKUNG
MODULE DE DÉTECTION DE VIBRATIONS TROIS POINTS À CONTRAINTE EXACTE

(30) Priority: 10.04.2017 US 201715483302; 11.12.2017 US 201715837443
(43) Date of publication of application: 17.10.2018
(73) Proprietor: ITT Manufacturing Enterprises LLC, Wilmington, DE 19801 (US)
(72) Inventor: DeCook, Bradley, Victor, NY 14564 (US); Playford, Mark, Liverpool, NY 13088 (US)
(74) Representative: Patentanwälte Magenbauer & Kollegen Partnerschaft mbB

(56) References cited:
- WO-A2-03/040780
- GB-A- 1 319 055
- US-A1- 2012 292 469
- US-A1- 2015 355 216

## Description

### BACKGROUND OF THE INVENTION

### 1. Field of the Invention

This application relates to a vibration sensing module device for use in combination with a vibrating machine or structure that is configured to be securely mounted to the vibrating machine or structure.

### 2. Brief Description of Related Art

The present invention relates to an apparatus for monitoring a vibrating machine or structure, such as a pump or pump assembly. By way of example, such an apparatus may take form of a sensing module for configuring on the vibrating machine or structure, such as the pump or pump assembly. The sensing module may include an outer shell configured with a recessed portion, and a base having encapsulated electronics.

GB 1 319 055 A discloses a transducer mounting arrangement including a vibration sensitive element. The vibration-sensing element comprises a base in form of an end plate, two retaining nuts and a grommet with an incorporated anvil. The grommet is located in a central hole in the end plate. Moreover, the anvil projects through the grommet.

US 2015/355216 A1 discloses a vibration-sensing field unit, comprising a mount from which three legs are protruding. Moreover, the mount comprises a central hole for receiving a bolt or other fastening components to secure the vibration-sensing field unit to a machine.

US 2012/292469 A1 discloses a fastening assembly for a sensor assembly. It is teached to use a single-point fixing means. Therefore, the teaching leads away to use a triangular set of mounting projections.

An example of a sensing module is shown and described in applicant's U.S. Application No. 14/685,134 filed on April 13, 2015.

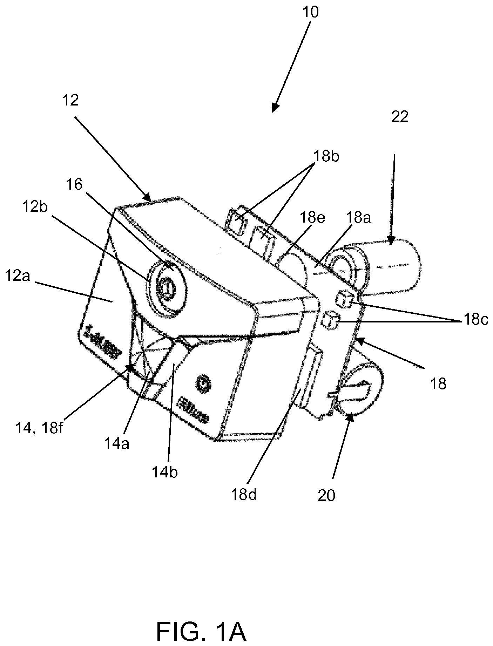

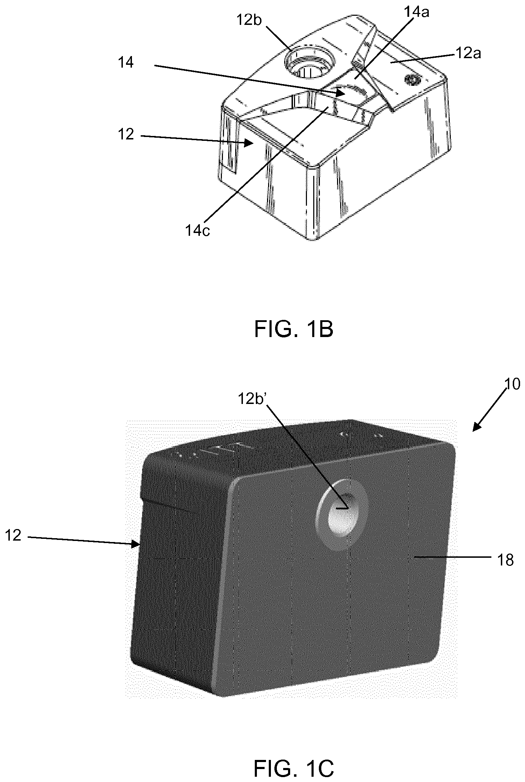

By way of example, FIGS. 1A-1C show apparatus 10 in the form of a sensing module for configuring on a vibrating machine or structure, such as pump or pump assembly 100. The sensing module 10 may include an outer shell 12 having a top surface 12a with a recessed portion in combination with a base 18, e.g., which may take the form of a printed circuit board 18a, having encapsulated electronics, e.g., such as elements 18b, 18c, 18d and 18f. The recessed portion is configured as, or formed with, an opening therein. The outer shell 12 also includes a circular rim 12b that is configured to form a mounting opening 12b' for receiving the mounting screw or fastener 16 to fasten the sensing module 10 to the vibrating machine or structure, such as the pump or pump assembly 100.

The encapsulated electronics 18b, 18c, 18d and 18f includes a multicolored light array 18f (e.g., in the form of an LED array) that is arranged inside the outer shell 12, and configured to respond to signaling containing information about a condition being sensed and monitored by the sensing module 10 and provide along a projection axis at least one beam of light containing information about the condition. By way of example, the signaling may be received from one or more of the other encapsulated electronics 18b, 18c, 18d, e.g., which may include an accelerometer, a temperature sensing device or other suitable sensing device that is either now known or later developed in the future.

The sensing module 10 also includes a domed lens 14 configured in the recessed portion of the outer shell 12, that is configured to reflect, re-reflect and project the at least one beam of light outwardly in relation to the projection axis with a visibility of 360° about the sensing module 10 for viewing from afar, e.g., by an observer visually monitoring the sensing module 10. The domed lens 14 may include a middle lens portion 14a configured with a top curved surface and two side lens portions 14b, 14c configured with side surfaces. The middle lens portion 14a and two side lens portions 14b, 14c are transparent to project the at least one beam of light from the domed lens 14. The top curved surface may be configured with a suitable curvature for projecting, reflecting and re-reflecting the at least one beam of light.

In effect, the visibility of the at least one beam of light being reflected, rereflected and projected from the domed lens 14 may be defined visually either as being 360° in relation to a horizontal plane or as being 180° in relation to a vertical plane, when viewed by an observer in an industrial plant monitoring the vibrating machine or structure from a distance. In either case, the observer in the industrial plant monitoring the vibrating machine or structure may able to see the at least one beam of light being projected from the domed lens 14 from afar, e.g., with a glow of projected light.

In FIG. 1A-1C, the sensing module 10 is shown to include a mounting screw or fastener 16, a power source 20, such as a lithium ion battery, as well as a stand-off mount 22 for configuring the sensing module 10 on the vibrating machine or structure, such as the pump or pump assembly 100. A clearance hole 18e may be formed in the base 18 for receiving the stand-off mount 22.

However, a shortcoming of the above-described sensing module 10 is that it is fastened to the pump 100 or other equipment in a manner wherein the sensor module 10 may not be rigidly mounted to the pump 100 or other equipment in all six degrees of freedom. Typical mounting scenarios may include a flat surface against a flat surface, a flat surface against a curved surface or V-rails against a curved surface.

The sensing module 10 may be attached to the pump 100 or other equipment in an over-constrained or under-constrained manner.

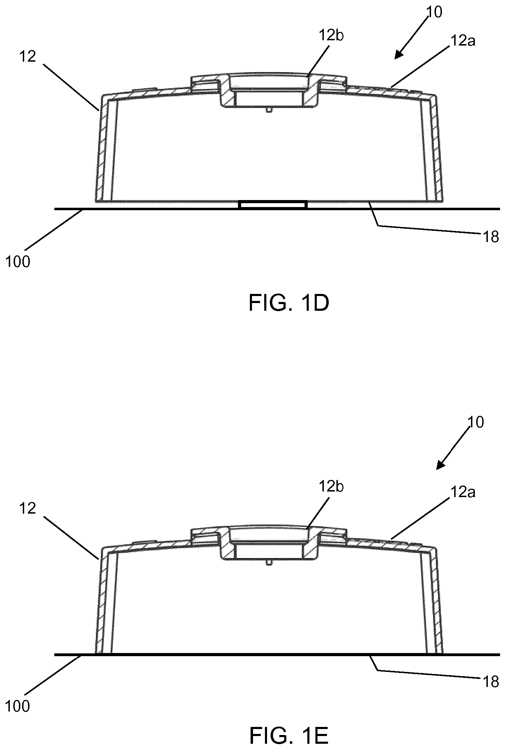

FIG. 1D shows an example of an under-constrained design. A gap between the flat base 18 of the sensing module 10 and the pump 100, caused by a rim projecting from the base 18, produces additional resonances, which degrade vibration measurement accuracy.

FIG. 1E shows an example of an over-constraint design. Multiple mounting contacts are made between the base 18 of the sensing module and the pump 100, which also produces additional resonances degrading vibration measurement accuracy. An additional example of such a design can be found in applicant's U.S. Design Patent D747,225. The mounting bracket shown therein includes a nub, which provides a single point contact, and an edge, which provides a "line" with multiple points of contact.

### SUMMARY OF THE INVENTION

The present invention provides a new and unique module for monitoring a vibrating machine or structure, such as a pump or pump assembly, having three mounting points on the module for securely mounting the module to the pump or pump assembly.

The present invention increases the overall natural frequency of the modules' mounting to the vibrating machine, resulting in more accurate higher frequency measurement over a larger frequency band.

The shortcomings of the art described above are overcome by providing an exact constraint method of utilizing a built-in three-point mount configuration. The three-point mount configuration provides the vibration sensor module with a very rigid mount connection to virtually any surface condition, including flat, curved or irregular. All six degrees of freedom (X, Y, Z, theta-X, theta-Y and theta-Z) are properly constrained with this design approach, providing the best connection to the piece of equipment for vibration sensing and analysis.

The three-point mount also provides an air barrier or gap between the vibration sensing module and the equipment surface, allowing the sensor to be mounted to devices having a high surface temperature. The air gap acts as a thermal insulator for the sensor module, which can prevent premature sensor failure. This allows the sensor to be mounted onto hot running equipment, and in harsher environments.

By way of example, the apparatus may take the form of a vibration sensing module for mounting on the vibrating machine or structure, such as the pump or pump assembly.

In accordance with the invention, a vibration sensing module for mounting on a vibrating machine or structure, including a pump, is provided. The vibration sensing module comprises a base comprising three mounting points configured to mount the vibration sensing module to the vibrating machine or structure. The three mounting points comprise a first mounting projection providing a first mounting point, a second mounting projection providing a second mounting point, and a third mounting projection providing a third mounting point protruding out from the base and comprising a rim surrounding an opening, wherein the opening is formed through a body of the vibration sensing module and is configured to receive a fastener configured to secure the sensing module to the vibrating machine or structure.

In accordance with one or more embodiments of the vibration sensing module, the first, second and third mounting projections are configured to constrain movement of the vibration sensing module in six degrees of freedom when the sensing module is mounted to the vibrating machine or structure.

In accordance with one or more embodiments of the vibration sensing module , the first, second and third mounting projections are configured to form an air gap between the sensing module and the vibrating machine or structure when the sensing module is mounted to the vibrating machine or structure.

Further in accordance with one or more embodiments of the vibration sensing module, the first mounting projection and the second mounting projection are rounded projections extending from the base.

Further in accordance with one or more embodiments of the vibration sensing module, the first mounting projection and second mounting projection have the same diameter. The first mounting projection and second mounting projection may also have the same height projecting from the base.

In the invention, the base of the vibration sensing module is rectangular in shape, and the first and second mounting projections are positioned in separate corners of the base. The first and second mounting projections are positioned in separate corners along a same edge of the base, and the third mounting projection is positioned in a location on the base of the sensing module so as to form a triangular set of mounting projections on the base of the vibration sensing module.

The first mounting projection, second mounting projection and third mounting projection are positioned on the base of the sensing module so as to form a set of mounting points on the base of the sensing module arranged in a triangle. The first mounting projection and the second mounting projection are positioned at extremities of the base of the sensing module. The triangle may include an angle at the third mounting projection of approximately 120 degrees. Pre-load force may be positioned at a centroid of the triangle formed by the first mounting projection, second mounting projection and third mounting projection.

Further in accordance with one or more embodiments of the vibration sensing module, the first mounting projection and the second mounting projection are hemispherical projections extending from the base.

Further in accordance with one or more embodiments of the vibration sensing module, the first mounting projection and the second mounting projection are molded into the base.

Further in accordance with one or more embodiments of the vibration sensing module, the first mounting projection and the second mounting projection are secured to the base with a press fit, threading or an industrial adhesive.

Further in accordance with one or more embodiments of the sensing module of first aspect of the invention, the base comprises one or more cavities formed therein.

### BRIEF DESCRIPTION OF THE DRAWING

The drawing includes the following Figures, which are not necessarily drawing to scale:
FIG. 1A is an exploded view of a vibration sensing module, according to some embodiments of the present invention.
FIG. 1B is a top perspective view of an outer shell of a vibration sensing module, according to some embodiments of the present invention.
FIG. 1C is a bottom perspective view of an outer shell of a vibration sensing module, according to some embodiments of the present invention.
FIG. 1D is a cross-sectional view of a vibration sensing module mounted to a pump in an under-constrained manner.
FIG. 1E is a cross-sectional view of a vibration sensing module mounted to a pump in an over-constrained manner.
FIG. 2A is a top perspective view of a vibration sensing module according to a first embodiment of the present invention.
FIG. 2B is a bottom perspective view of a vibration sensing module according to the first embodiment of the present invention.
FIG. 2C is view of a mounting projection on the base of a vibration sensing module according to the first embodiment of the present invention.
FIG. 2D is a side view of a vibration sensing module according to the first embodiment of the present invention mounted to a pump.

### DETAILED DESCRIPTION OF THE INVENTION

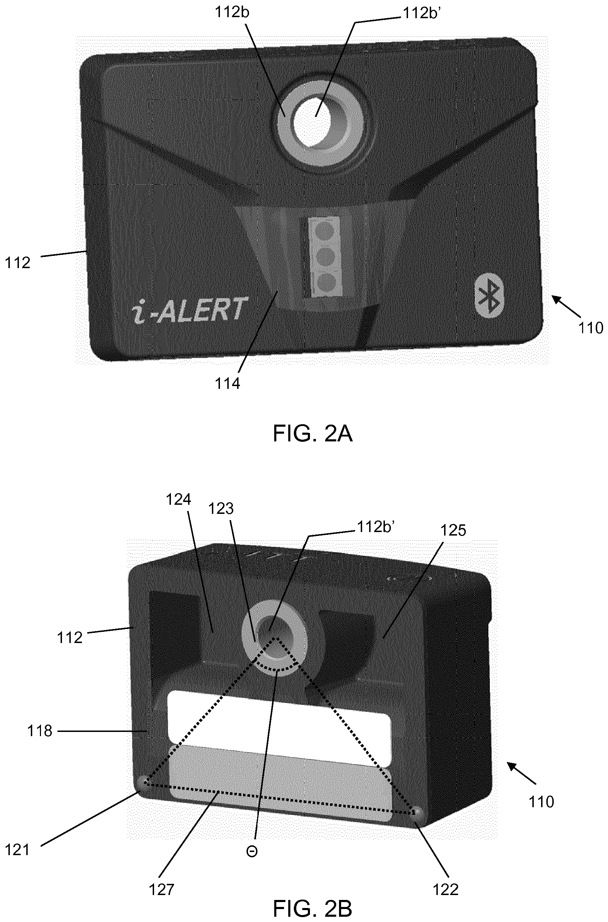

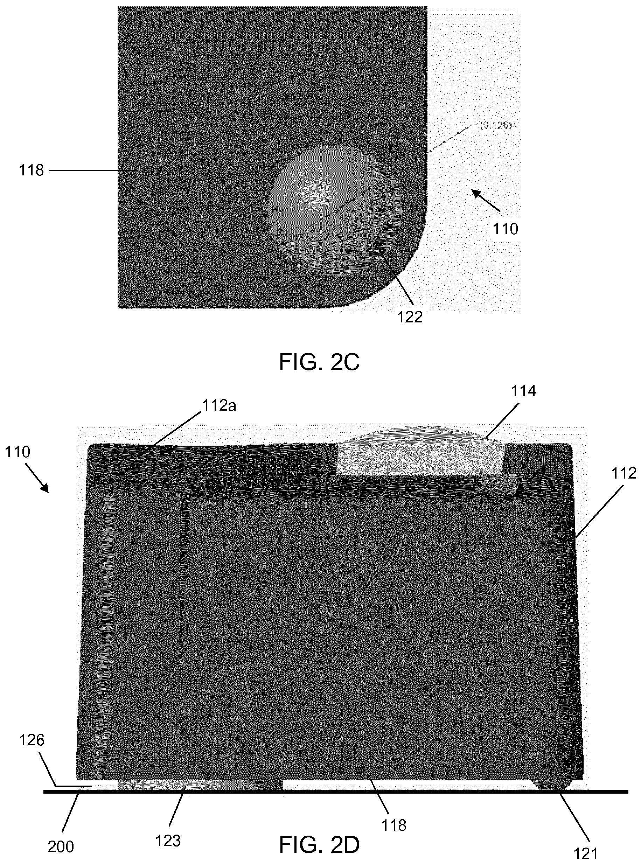

The present invention will now be described with reference made to FIGS. 2A-2D.

By way of example, FIGS. 2A-2B show a vibration sensing module 110 for mounting on a vibrating machine or structure, such as pump or pump assembly 200. The vibration sensing module 110 may include an outer shell 112 having a top surface 112a and a base 118, and encapsulated electronics. The encapsulated electronics may include, for example, a multicolored light array in the form of an LED array that is arranged inside the outer shell 112, and configured to respond to signaling containing information about a condition being sensed and monitored by the vibration sensing module 110 and at least one beam of light containing information about the condition. By way of example, the signaling may be received from one or more of the other encapsulated electronics, which may include an accelerometer, a temperature sensing device or other suitable sensing device that is either now known or later developed in the future. The sensing module 110 may also include a domed lens 114 configured on the outer shell 112, that is configured to reflect, re-reflect and project the at least one beam of light outwardly with a visibility of 360° about the sensing module 110 for viewing from afar, e.g., by an observer visually monitoring the sensing module 110. As a result, an observer in an industrial plant monitoring the vibrating machine or structure may able to see the at least one beam of light being projected from the domed lens 114 from afar, e.g., with a glow of projected light. The outer shell 112 may also include a circular rim 112b that is configured to form a mounting opening 112b' for receiving a mounting screw or fastener to fasten the sensing module 110 to the vibrating machine or structure, such as the pump or pump assembly 200.

The sensing module 110 may operate and function in the same manner as the sensing module 10 of FIG. 1A-1C described above and as described in U.S. Application Serial No. 14/685,134 filed on April 13, 2015.

The sensing module 110 includes a unique mounting arrangement on the base 118 for mounting the sensing module 110 to a vibrating machine or structure, such as a pump 200, as shown for example in FIGS. 2B-2D. The base 118 comprises three mounting points in the form of three mounting projections 121, 122, 123.

The base 118 of the sensing module 110 includes a first mounting projection 121 and a second mounting projection 122, which project from the base 118. The first mounting projection 121 and the second mounting projection 122 may be hemispherical in shape and may be substantially similar in size. In a preferred embodiment, the first and second mounting projections comprise a rounded shape, in order to create a true point contact to the mating surface, although other shapes may be utilized that create a contact point for the mating surface. In the invention, the base 118 is rectangular in shape, and the first mounting projection 121 and second mounting projection 122 are positioned in separate corners or extremities of the base 118. In a preferred embodiment, the first mounting projection 121 and second mounting projection 122 are separated by an angle Θ of approximately 60 degrees, approximately 120 degrees or approximately 60 to 120 degrees. The first mounting projection 121 and second mounting projection 122 can be molded into the vibration sensing module 110 as part of the base 118. This may be done for ease of manufacturability and cost. In alternative embodiments, the first mounting projection 121 and/or second mounting projection 122 could also be separate parts that are secured in place to the base 118 via press-fit, threaded, industrial adhesive, or other attachment means.

The base 118 also includes a third mounting projection 123 in the form of a rim 123 that surrounds the opening 112b' through the vibration sensing module 110. The opening 112b' is configured to receive a fastener, such as a bolt or a screw, which may be received in a corresponding opening on the pump 200. The rim 123 may come into contact with the pump 200, as shown in FIG. 2D, separating the base 118 of the vibration sensing module 110 from the surface of the pump 200.

A force is applied to pre-load the vibration sensing module 110 against its mount surface, such as the pump 200. The screw fastener (not shown) is provided for this purpose. The pre-load or mounting force lies within the triangle (represented by dashed lines 127 shown in FIG. 2B) formed by the three points of contact 121, 122, 123, preferably at the centroid of the triangle 127.

When the vibration sensing module 110 is secured to the pump 200, an air gap 126 is formed between the base 118 of the vibration sensing module 110 and the surface of the pump 200 as a result of the three mounting points. The air gap 126 provides a thermal barrier between the vibration sensing module 110 and the pump 200, which allows the vibration sensing module 110 to function in high-temperature environments.

As shown for example in FIG. 2B, one or more cavities 124, 125 may also be formed in the base 118 of the vibration sensing module 110. The cavities 124, 125 reduce the thickness of the base 118 of the vibration sensing module 110, which may be injection molded. Additionally, reducing the weight of the module without reducing its structural strength results in a higher natural frequency of the vibration sensing module 110, and this can be achieved by incorporating cavities 124, 125 in the base 118.

### The Scope of the Invention

It should be understood that the drawing herein is not drawn to scale.

Although the invention has been described and illustrated with respect to exemplary embodiments thereof, the foregoing and various other additions and omissions may be made therein and thereto without departing from the scope of the present invention as set forth in the appended claims.

## Claims

1. Vibration sensing module (110) for mounting on a vibrating machine or structure, including a pump, comprising:
a base (118) comprising three mounting points (121, 122, 123) configured to mount the vibration
sensing module (110) to the vibrating machine or structure, wherein the three mounting points (121, 122, 123) comprise:
a first mounting projection (121) providing a first mounting point;
a second mounting projection (122) providing a second mounting point; and
a third mounting projection (123) providing a third mounting point,
wherein the third mounting projection (123) protrudes out from the base (118) and the third mounting projection (123) comprises a rim (112b) surrounding an opening (112b'), wherein the opening (112b') is formed through a body of the vibration sensing module (110) and the opening (112b') is configured to receive a fastener configured to secure the vibration sensing module (110) to the vibrating machine or structure, **characterized in that** the base (118) of the vibration sensing module (110) is rectangular in shape, and the first and second mounting projections (121, 122) are positioned in separate corners of the base (118) along a same edge of the base (118), wherein the third mounting projection (123) is positioned in a location on the base (118) of the vibration sensing module (110) so as to form a triangular set of mounting projections on the base (118) of the vibration sensing module (110).

2. Vibration sensing module (110) of claim 1, wherein the first, second and third mounting projections (121, 122, 123) are configured to constrain movement of the vibration sensing module (110) in six degrees of freedom when the vibration sensing module (110) is mounted to the vibrating machine or structure.

3. Vibration sensing module (110) of claim 1 or 2, wherein the first, second and third mounting projections (121, 122, 123) are configured to form an air gap (126) between the vibration sensing module (110) and the vibrating machine or structure when the vibration sensing module (110) is mounted to the vibrating machine or structure

4. Vibration sensing module (110) of one of the preceding claims, wherein the first mounting projection (121) and the second mounting projection (122) are rounded projections extending from the base (118).

5. Vibration sensing module (110) of claim 4, wherein the first mounting projection (121) and second mounting projection (122) have the same diameter.

6. Vibration sensing module (110) of claim 4, wherein the first mounting projection (121) and second mounting projection (122) have the same height.

7. Vibration sensing module (110) of one of the preceding claims, wherein the triangle includes an angle at the third mounting projection (123) of approximately 120 degrees.

8. Vibration sensing module (110) of claim 7, wherein pre-load force is positioned at a centroid of the triangle formed by the first mounting projection (121), second mounting projection (122) and third mounting projection (123).

9. Vibration sensing module (110) of one of the preceding claims, wherein the first mounting projection (121) and the second mounting projection (122) are hemispherical projections extending from the base (118).

10. Vibration sensing module (110) of one of the preceding claims, wherein the first mounting projection (121) and the second mounting projection (122) are molded into the base (118) or are secured to the base (118) with a press fit, threading or an industrial adhesive.

11. Vibration sensing module (110) of one of the preceding claims, wherein the base (118) comprises one or more cavities (124, 125) formed therein.

## Patentansprüche

1. Vibrationserfassungsmodul (110) zur Befestigung an einer vibrierenden Maschine oder Struktur, einschließlich einer Pumpe, umfassend:
eine Basis (118), die drei Befestigungspunkte (121, 122, 123) umfasst, die konfiguriert sind, das Vibrationserfassungsmodul (110) an der vibrierenden Maschine oder Struktur zu befestigen, wobei die drei Befestigungspunkte (121, 122, 123) Folgendes umfassen:
einen ersten Befestigungsvorsprung (121), der einen ersten Befestigungspunkt bereitstellt;
einen zweiten Befestigungsvorsprung (122), der
einen zweiten Befestigungspunkt
bereitstellt; und
einen dritten Befestigungsvorsprung (123), der einen dritten Befestigungspunkt bereitstellt, wobei der dritte Befestigungsvorsprung (123) aus der Basis (118) herausragt und der dritte Befestigungsvorsprung (123) einen Rand (112b) umfasst, der eine Öffnung (112b') umgibt, wobei die Öffnung (112b') durch einen Körper des Vibrationserfassungsmoduls (110) hindurch gebildet ist und die Öffnung (112b') konfiguriert ist, ein Befestigungselement aufzunehmen, das konfiguriert ist, das Vibrationserfassungsmodul (110) an der vibrierenden Maschine oder Struktur zu sichern, **dadurch gekennzeichnet, dass** die Basis (118) des Vibrationserfassungsmoduls (110) eine rechteckige Form aufweist, und der erste und der zweite Befestigungsvorsprung (121, 122) in separaten Ecken der Basis (118) entlang einer gleichen Kante der Basis (118) positioniert sind, wobei der dritte Befestigungsvorsprung (123) an einer Stelle an der Basis (118) des Vibrationserfassungsmoduls (110) positioniert ist, sodass ein dreieckiger Satz von Befestigungsvorsprüngen an der Basis (118) des Vibrationserfassungsmoduls (110) gebildet wird.

2. Vibrationserfassungsmodul (110) nach Anspruch 1, wobei der erste, der zweite und der dritte Befestigungsvorsprung (121, 122, 123) so konfiguriert sind, dass sie eine Bewegung des Vibrationserfassungsmoduls (110) in sechs Freiheitsgraden beschränken, wenn das Vibrationserfassungsmodul (110) an der vibrierenden Maschine oder Struktur befestigt ist.

3. Vibrationserfassungsmodul (110) nach Anspruch 1 oder 2, wobei der erste, der zweite und der dritte Befestigungsvorsprung (121, 122, 123) so konfiguriert sind, dass sie einen Luftspalt (126) zwischen dem Vibrationserfassungsmodul (110) und der vibrierenden Maschine oder Struktur bilden, wenn das Vibrationserfassungsmodul (110) an der vibrierenden Maschine oder Struktur befestigt ist.

4. Vibrationserfassungsmodul (110) nach einem der vorhergehenden Ansprüche, wobei der erste Befestigungsvorsprung (121) und der zweite Befestigungsvorsprung (122) abgerundete Vorsprünge sind, die sich von der Basis (118) erstrecken.

5. Vibrationserfassungsmodul (110) nach Anspruch 4, wobei der erste Befestigungsvorsprung (121) und der zweite Befestigungsvorsprung (122) den gleichen Durchmesser aufweisen.

6. Vibrationserfassungsmodul (110) nach Anspruch 4, wobei der erste Befestigungsvorsprung (121) und der zweite Befestigungsvorsprung (122) die gleiche Höhe aufweisen.

7. Vibrationserfassungsmodul (110) nach einem der vorhergehenden Ansprüche, wobei das Dreieck einen Winkel an dem dritten Befestigungsvorsprung (123) von ungefähr 120 Grad einschließt.

8. Vibrationserfassungsmodul (110) nach Anspruch 7, wobei eine Vorspannkraft auf einen Schwerpunkt des Dreiecks gerichtet ist, das durch den ersten Befestigungsvorsprung (121), den zweiten Befestigungsvorsprung (122) und den dritten Befestigungsvorsprung (123) gebildet wird.

9. Vibrationserfassungsmodul (110) nach einem der vorhergehenden Ansprüche, wobei der erste Befestigungsvorsprung (121) und der zweite Befestigungsvorsprung (122) halbkugelförmige Vorsprünge sind, die sich von der Basis (118) erstrecken.

10. Vibrationserfassungsmodul (110) nach einem der vorhergehenden Ansprüche, wobei der erste Befestigungsvorsprung (121) und der zweite Befestigungsvorsprung (122) in die Basis (118) eingeformt oder mit einem Presssitz, Gewinde oder einem Industrieklebstoff an der Basis (118) gesichert sind.

11. Vibrationserfassungsmodul (110) nach einem der vorhergehenden Ansprüche, wobei die Basis (118) einen oder mehrere darin ausgebildete Hohlräume (124, 125) umfasst.

## Revendications

1. Module de détection de vibrations (110) pour être monté sur une machine ou structure vibrante, incluant une pompe, comprenant :
une base (118) comprenant trois points de montage (121, 122, 123) configurés pour monter le module de détection de vibrations (110) sur la machine ou structure vibrante, dans lequel les trois points de montage (121, 122, 123) comprennent :
une première saillie de montage (121) fournissant un premier point de montage ;
une deuxième saillie de montage (122) fournissant un deuxième point de montage, et
une troisième saillie de montage (123) fournissant un troisième point de montage,
dans lequel la troisième saillie de montage (123) fait saillie de la base (118) et la troisième saillie de montage (123) comprend un rebord (112b) entourant une ouverture (112b'), dans lequel l'ouverture (112b) est formée à travers un corps du module de détection de vibrations (110) et l'ouverture (112b') est configurée pour recevoir une fixation configurée pour fixer le module de détection de vibrations (110) à la machine ou structure vibrante, **caractérisé en ce que** la base (118) du module de détection de vibrations (110) a une forme rectangulaire, et les première et deuxième saillies de montage (121, 122) sont positionnées dans des coins séparés de la base (118) le long d'un même bord de la base (118), dans lequel la troisième saillie de montage (123) est positionnée à un emplacement sur la base (118) du module de détection de vibrations (110) de manière à former un ensemble triangulaire de saillies de montage sur la base (118) du module de détection de vibrations (110).

2. Module de détection de vibrations (110) de la revendication 1, dans lequel les première, deuxième et troisième saillies de montage (121, 122, 123) sont configurées pour limiter le mouvement du module de détection de vibrations (110) dans six degrés de liberté lorsque le module de détection de vibrations (110) est monté sur la machine ou structure vibrante.

3. Module de détection de vibrations (110) de la revendication 1 ou 2, dans lequel les première, deuxième et troisième saillies de montage (121, 122, 123) sont configurées pour former un entrefer (126) entre le module de détection de vibrations (110) et la machine ou structure vibrante lorsque le module de détection de vibrations (110) est monté sur la machine ou structure vibrante.

4. Module de détection de vibrations (110) de l'une des revendications précédentes, dans lequel la première saillie de montage (121) et la deuxième saillie de montage (122) sont des saillies arrondies s'étendant de la base (118).

5. Module de détection de vibrations (110) de la revendication 4, dans lequel la première saillie de montage (121) et la deuxième saillie de montage (122) ont le même diamètre.

6. Module de détection de vibrations (110) de la revendication 4, dans lequel la première saillie de montage (121) et la deuxième saillie de montage (122) ont la même hauteur.

7. Module de détection de vibrations (110) de l'une des revendications précédentes, dans lequel le triangle comprend un angle au niveau de la troisième saillie de montage (123) d'approximativement 120 degrés.

8. Module de détection de vibrations (110) de la revendication 7, dans lequel une force de précharge est positionnée au niveau d'un centre de gravité du triangle formé par la première saillie de montage (121), la deuxième saillie de montage (122) et la troisième saillie de montage (123).

9. Module de détection de vibrations (110) de l'une des revendications précédentes, dans lequel la première saillie de montage (121) et la deuxième saillie de montage (122) sont des saillies hémisphériques s'étendant depuis la base (118).

10. Module de détection de vibrations (110) de l'une des revendications précédentes, dans lequel la première saillie de montage (121) et la deuxième saillie de montage (122) sont moulées dans la base (118) ou sont fixées à la base (118) par un emmanchement à force, un filetage ou un adhésif industriel.

11. Module de détection de vibrations (110) de l'une des revendications précédentes, dans lequel la base (118) comprend une ou plusieurs cavités (124, 125) formées dans celle-ci.
